# EUROPEAN PATENT APPLICATION

(11) **EP 4 763 394 A1**
(43) Date of publication of application: **24.06.2026**
(21) Application number: 25224393.6
(22) Date of filing: 17.12.2025
(51) Int. Cl.: B23K 9/10, H04B 3/54, B23K 9/12

(54) **SYSTEM FOR PROVIDING POWER-OVER-DATALINE BASED COMMUNICATION BETWEEN COMPONONENTS OF WELDING-TYPE SETUPS**

(30) Priority: 19.12.2024 US 202463736356 P; 20.11.2025 US 202519395372
(71) Applicant: Illinois Tool Works Inc., Glenview IL 60025 (US)
(72) Inventor: OTT, Brian, Glenview 60025 (US)
(74) Representative: HGF

(57) **Abstract**

A welding-type system may include a welding-type power source, configured to provide power to one or more components of the welding-type system, and a welding-type wire feeder, configured to feed electrode wire during welding-type operations. A multi-conductor connector may be used in connecting the welding-type power source and the welding-type wire feeder. The multi-conductor connector includes a plurality of conductors. The welding-type power source may provide, via the plurality of conductors in the multi-conductor connector, power to the welding-type wire feeder, for powering and/or driving the welding-type wire feeder. The welding-type power source and the welding-type wire feeder may perform data communication via the plurality of conductors. The data communication may be performed during the providing of power. The data communication may be performed using at least one conductor that is also used in the providing of power from the welding-type power source to the welding-type wire feeder.

## Description

### CLAIM OF PRIORITY

This patent application claims priority to and claims benefit from United States Provisional Patent Application Serial No. 63/736,356, filed on December 19, 2024. The above identified application is hereby incorporated herein by reference in its entirety.

### BACKGROUND

Welding has become increasingly ubiquitous. Welding is typically done in manual manner (e.g., performed by a human) but in some instances may be performed in an automated manner (e.g., performed by robotic arm or the like). Equipment or components used during welding operations may be driven using engines. For example, engines may be used to drive, for example, generators, power sources, etc. used during welding operations.

In some instances, conventional welding-type systems may have some limitations and/or disadvantages. For example, conventional solutions for facilitating communication between different components of welding-type setups, if any existed, may be inefficient, add cost and complexity, and/or may be burdensome to set up and/or use.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for providing power-over-dataline based communication between components of welding-type setups, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 illustrates an example welding-type setup that may be configured for use of power-over-dataline communications.
Fig. 3 illustrates an example communication network within a welding-type setup configured for supporting power-over-dataline (PoDL) based communication.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

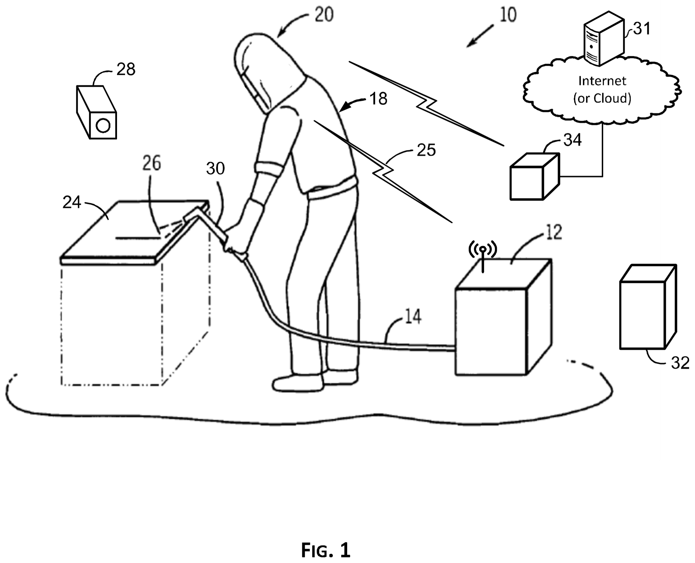

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

In some instances, welding-type setups may be configured for automated operations, where at least certain aspects or functions associated with the welding operations (e.g., applying of welds) are automated (e.g., robotically).

In accordance with the present disclosure, welding-type setups (e.g., the welding-type setup 10 of Fig. 1) may be configured to incorporate and/or support use of improved communication solutions. In this regard, in some instances, various components of welding-type setups may need to communicate with each other, such as to enable providing or receiving control input, providing or receiving feedback or the like, etc. For example, in many instances welding power sources and wire feeders may need to communicate, particularly during welding operations. As such, there may need to provide connectivity between the welding power sources and wire feeders to enable and/or facilitate such interactions.

For example, as noted above, the welding-type setup 10 may incorporate a wire feeder that may be used in feeding, e.g., electrode wire or the like, during welding operations, and in some instances controlling or adjusting certain aspects or parameters associated with the wire feeder and/or the feeding of wire thereby may be desirable. One such aspect or parameter is the tensioning of the wire while being fed during welding-type operations. In this regard, in some implementations, the tensioning of the wire may be controlled such as by adjusting a force applied on the wire within the wire feeder.

In conventional solutions, connecting remote wire feeders to the power sources providing the power to driver the wire feeders may be done either by 1) use of dedicated communication connector (e.g., by use multi-conductor cable incorporating separate connectors or conductors for providing power and communications, separately), or 2) via the weld circuit. In this regard, one example of weld circuit based approach is voltage-sensing wire feeder, where power for the wire feeder is derived from the welding arc, with no additional cables being utilized. In the case of voltage-sensing solutions, rudimentary communications may be incorporated onto the weld circuit (e.g., using something similar to Miller ArcReach). In the control cable domain, there are many examples of solutions with power, digital, and analog signaling present with cables spanning from five to over twenty conductors to provide power and signal information.

However, such conventional solutions may have various limitations and/or shortcomings, such as with respect to complexity, cost, inefficiency, and the like. In this regard, common deficiencies of existing conventional solutions typically relate to the weight, durability, and repairability, particularly in environments with harsh work conditions (e.g., shipyards and the like). In particular, in various existing solutions small gauge conductors are used to manage the size and weight of the cable. However, use of such small gauge conductors may diminish the cables' reliability/ruggedness and repairability.

Solutions in accordance with the present disclosure overcome at least some of the limitations and/or shortcomings associated with conventional solutions, such as by providing improved mechanisms for facilitating data communication between welding power sources and wire feeders. In particular, solutions based on the present disclosure may allow for use of connectors (e.g., multi-conductor connectors) that are already used in the welding-type setup in delivering power from the welding power sources to the wire feeders for data communication between these components. For example, in various embodiments, one or more conductors of such multi-conductor connectors may be used for performing the data communication, even when the one or more conductors are actively used for the power delivery. In this regard, use of the same connectors-that is, utilizing power connectors for data communication-may offer many advantages compared to existing solutions, but particularly with respect to weight reduction and/or use of existing cable infrastructure.

In some example implementations, a simple two-conductor cable may be configured and used to serve as both the power connection to the wire feed unit and also incorporates digital communications over the same conductors. By utilizing only two conductors the size of each conductor can be increased which in turn improves their robustness and reliability in a harsh environment. Also, by utilizing only two conductors the termination can be large and robust and afford/facilitate ease of repair if a failure precipitates. Nonetheless, the disclosure is not limited to use of 2-conductor connectors, and instead any suitable multi-conductor connector may be used. For example, in some instances, 3-conductor connectors or 4-conductor connectors may be used.

In various example implementations, data communication may be performed using single-pair Ethernet (SPE) based connections via power-over-dataline (PoDL) based communication. In this regard, as used herein the term "powerline" refers to specifically and exclusively the conductors being used to provide operational power from the welding-type power source to the welding-type wire feeder. Nonetheless, the disclosure is not limited to any particular communication standard, protocol, mechanism, or the like, and any suitable design or approach may be used as long as data communication may be performed via conductors of the multi-conductor connectors used in connecting the power source(s) and the wire feeder(s), and with the data communication occurring during power delivery via same conductors.

The data communication may be bidirectional data communication-that is, from welding power sources to the wire feeders, and from the wire feeders to the welding power sources. In some instances, the data communication may be digital communication. In this regard, as used therein, "digital communication" may comprise communication where the communication of data itself is digital in nature but the signaling used to facilitate the communication may have and/or may use analog characteristics-e.g., using analog modulation. Such digital communication may be bidirectional digital communication.

In some instances, the solutions proposed herein-namely, use of multi-conductor power connector for data communication-may be used in combination with other solutions, to further improved performance. For example, in some implementations, conductors of the multi-conductor power connector may be used to provide power and addressing from the welding power source to the wire feeder, and at least portion of the data communication then may be performed via RF wireless links (e.g., using the addressing information). Also, in some in some implementations, multi-conductor connector based communication may be used in combination with over-the-weld-circuit communication, such as to sufficiently add bandwidth and/or allow for more advanced communication.

Accordingly, solutions based on the present disclosure may allow for improved performance, compared to conventional solutions, such as with respect to attributes like ruggedness, repairability, cost, weight, communications rate/reach, and/or coexistence with alternative connections.

Example embodiments based on the present disclosure, and details related thereto, are described in more detail below.

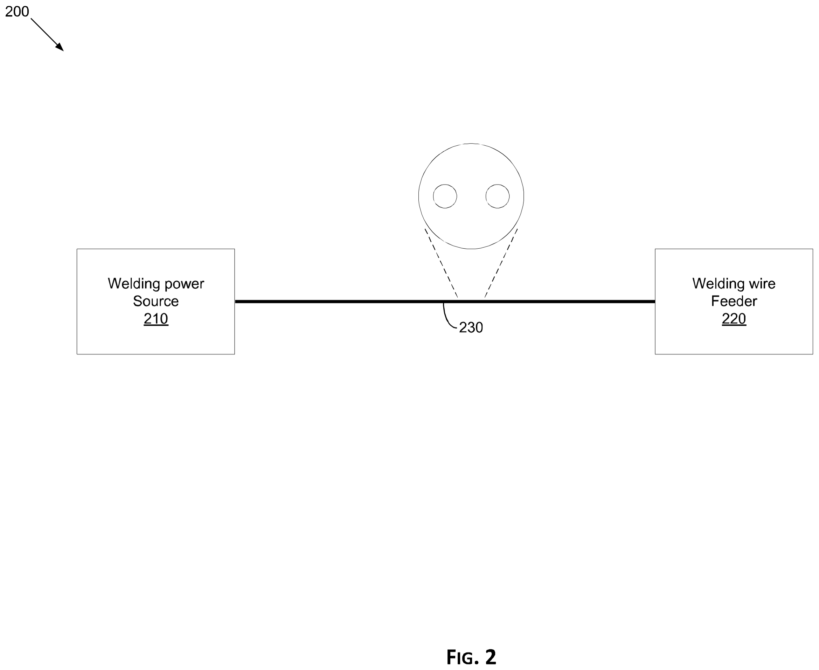

Fig. 2 illustrates an example welding-type setup that may be configured for use of power-over-dataline communications. Shown in Fig. 2 is welding-type setup 200 (or portion thereof).

The welding-type setup 200, and components thereof, may be substantially similar to the welding-type setup 100 of Fig. 1, and may operate in substantially similar manner. However, the welding-type setup 200 may be configured for supporting and utilizing data communication via the conductors of multi-conductor connector 230, such as using power-over-dataline (PoDL) based communications.

In this regard, shown in Fig. 2 are a welding-type power source 210 and a welding-type wire feeder 220 that are used in the welding-type setup 200. Also shown is a multi-conductor connector 230, which is used in connecting the welding-type power source 210 and welding-type wire feeder 220

The power source 210 may be configured to provide power to one or more other components in the welding-type setup 200. The power source 210 may comprise suitable hardware and circuitry (e.g., control circuits) for facilitating the providing of power, and/or controlling or managing functions associated with the providing of power.

The wire feeder 220 may be configured to feed electrode wire during welding-type operations. The electrode wire may be fed from a wire source, such as a wire spool or the like. The wire source may be incorporated into the wire feeder 220-that is, the wire feeder 220 may incorporate component for receiving and incorporating the wire source (e.g., wire spool). Alternatively, the wire source may be separate from and external to the wire feeder 220 (e.g., a separate physical component in the welding-type setup 200).

The multi-conductor connector 230 may be configured for connecting the welding-type power source 210 to the welding-type wire feeder 220, and for providing power to the welding-type wire feeder 220, for powering and/or driving the welding-type wire feeder 220 during the welding-type operations. The multi-conductor connector 230 may comprise a plurality of conductors, with the power being provided from the welding-type power source 210 to the welding-type wire feeder 220 via plurality of conductors.

For example, the multi-conductor connector 230 may comprise a pair of (two) conductors. However, the disclosure is not limited to such implementations, and as such in other embodiments more conductors (e.g., three conductors, four conductors, etc.) may be used. The multi-conductor connector 230 may further comprise a shield (or the like) surrounding and/or enclosing the plurality of conductors, such as to provide shielding and/or protection of the conductors (e.g., from ambient environments and/or physical conditions that may damage the conductors and/or may affect operations using the conductors.

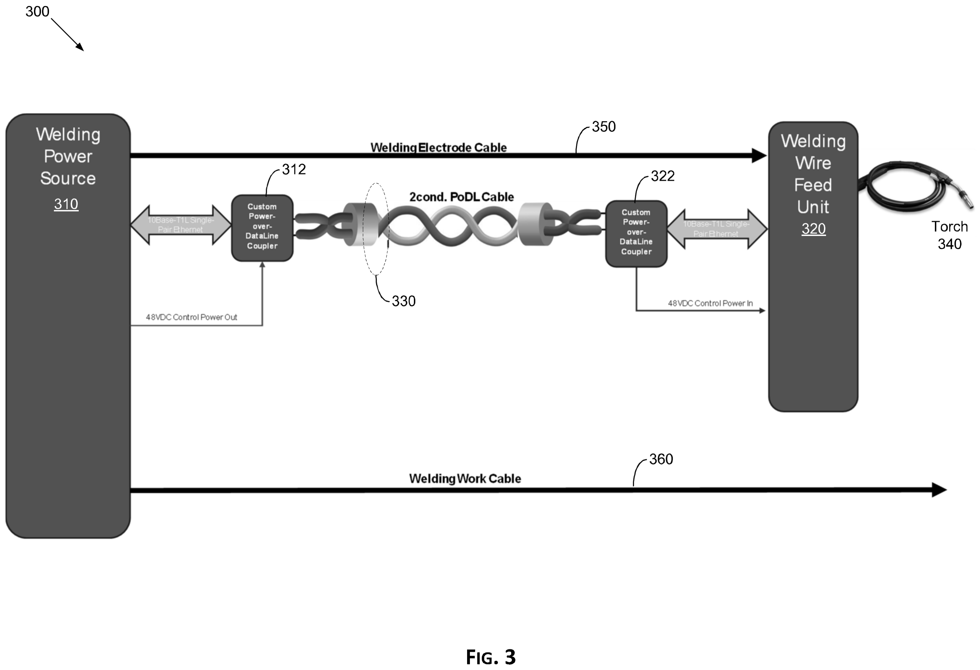

In example operation, the welding-type setup 200 may be configured to provided data communication, via the multi-conductor connector 230, between the welding-type power source 210 and the welding-type wire feeder 220 during welding operations, with the data communication being performed via one or more conductors of the multi-conductor connector 230 that may be concurrently used in providing power to the welding-type wire feeder 220. In this regard, as described herein, accordance with the present disclosure, one or both of the welding-type power source 210 and the welding-type wire feeder 220 may be configured to set up wired-based connections, via conductors of the multi-conductor connector 230, for the data communication. For example, in some implementations, the data communication may be performed using power-over-dataline (PoDL) based communication. An example PoDL based configuration is illustrated and described in more detail with respect to Fig. 3.

The wired-based connections may be Ethernet based connections, and as such may be set up and/or configured using an Ethernet based protocol or standard. For example, in some implementations, single-pair Ethernet (SPE) based connections may be used, using two conductors in the multi-conductor connector 230.

Fig. 3 illustrates an example communication network within a welding-type setup configured for supporting power-over-dataline (PoDL) based communication. Shown in Fig. 3 is welding-type setup 300 (or a portion thereof).

As shown in Fig. 3 are a welding power source 310 and a welding wire feeder 320 that are used in the welding-type setup 300. Each of these components may be substantially similar to the similarly named components of the welding-type setup 200, and may operate in a substantially similar manner. The welding power source 310 and the welding wire feeder 320 are connected via a multi-conductor connector 330. In this regard, the multi-conductor connector 330 may be substantially similar to the multi-conductor connector 230 of Fig. 2, and may operate in substantially similar manner. In this regard, the multi-conductor connector 330 similarly may comprise a pair of (two) conductors that may be used to facilitate providing power from the welding power source 310 to the welding wire feeder 320, to enable driving or otherwise powering the welding wire feeder 320 during welding operations.

Also shown in Fig. 3 are other components of the welding-type setup 300-namely, torch 340, welding electrode cable 350, and welding work cable 360. In this regard, these components may be used in forming and/or providing the weld circuit connections.

In accordance with solutions based on the present disclosure, the multi-conductor connector 330 may be used to facilitate data communication, between the welding power source 310 and the welding wire feeder 320, over the conductors used in the providing of power, as described herein. In particular, multi-conductor connector 330 may be configured for supporting or otherwise facilitating power-over-dataline (PoDL) based communication via the two conductors of the multi-conductor connector 330, as shown.

For example, as shown in Fig. 3, the welding power source 310 and welding wire feeder 320 may (e.g., collaboratively or otherwise) set up a power-over-dataline (PoDL) network for data communication via the multi-conductor connector 330. In this regard, data communication corresponding to and/or associated with the PoDL network may be performed via one or both of the two conductors of the multi-conductor connector 330, with the data communication optionally being done during active providing of power from the welding power source 310 to the welding wire feeder 320. As illustrated in Fig. 3, the PoDL network/connection(s) is different from and/or may operate independent of the weld circuit (and connections thereof).

In some instances, additional components may be used to facilitate the data communication over multi-conductor as described herein, with each of these components comprising suitable circuitry and/or hardware resources for performing functions attributed thereto as described herein. For example, in implementations supporting power-over-dataline (PoDL), such as the one shown in Fig. 3, coupler components may be used on both ends (e.g., a PoDL coupler 312 at the welding power source 310, and a PoDL coupler 322 at the welding power source 310) for enabling coupling onto the conductors of the multi-conductor connector 330, to enable performing communication of signals associated with the PoDL based communication. Each of the PoDL coupler 312 and the PoDL coupler 322 may comprise suitable circuitry for enabling sending and/or receiving data, transmitted and/or received by the welding power source 310 and the welding wire feeder 320, via the pair of conductors of the multi-conductor connector 330. The data communication may comprise 10BaseT1L single-pair Ethernet (SPE) based communication, as shown.

The additional components may be newly-added in the welding-type setup, such as stand-alone components and/or as sub-components within the existing components of the welding-type setup. For example, the PoDL coupler 312 may be integrated into and/or otherwise be a subcomponent of the welding power source 310. Similarly, the PoDL coupler 322 may be integrated into and/or otherwise be a subcomponent of the welding wire feeder 320. Alternatively, at least some of the functions performed by these additional components may be performed by existing circuitry and/or hardware resources of existing components of the welding-type setup.

In some instances, the PoDL network may be utilized for data communication by other components and/or devices-that is, components or devices other than the welding power source 310 and/or the welding wire feeder 320.

An example welding-type system, in accordance with the present disclosure, comprises a welding-type power source configured to provide power to one or more components of the welding-type system; a welding-type wire feeder configured to feed electrode wire during welding-type operations; and a multi-conductor connector configured for connecting the welding-type power source to the welding-type wire feeder, the multi-conductor connector comprising a plurality of conductors. The welding-type power source is configured to provide, via the plurality of conductors in the multi-conductor connector, power to the welding-type wire feeder, for powering and/or driving the welding-type wire feeder during the welding-type operations. One or both of the welding-type power source and the welding-type wire feeder are configured to perform data communication via the plurality of conductors. The data communication is performed during the providing of power via the plurality of conductors. The data communication is performed using at least one conductor that is also used in the providing of power from the welding-type power source to the welding-type wire feeder. The data communication may be bidirectional data communication. The multi-conductor connector may comprise a shield surrounding and/or enclosing the plurality of conductors.

In an example embodiment, the data communication comprises digital communication. In this regard, as used therein, "digital communication" may comprise communication where the communication of data itself is digital in nature but the signaling used to facilitate the communication may have and/or may use analog characteristics-e.g., using analog modulation. The digital communication may be bidirectional digital communication.

In an example embodiment, one or both of the welding-type power source and the welding-type wire feeder are configured to perform the data communication using power-over-dataline (PoDL) based communication. In this regard, as used herein the term "powerline" refers to specifically and exclusively the conductors being used to provide operational power from the welding-type power source to the welding-type wire feeder.

In an example embodiment, one or both of the welding-type power source and the welding-type wire feeder are configured to perform data communication using single-pair Ethernet (SPE) based communication.

In an example embodiment, one or both of the welding-type power source and the welding-type wire feeder are configured to perform the data communication via same conductors used in the providing of power.

In an example embodiment, the multi-conductor connector comprises a two-conductor cable.

In an example embodiment, the multi-conductor connector comprises a three-conductor cable.

In an example embodiment, the multi-conductor connector comprises a four-conductor cable.

Another example welding-type system, in accordance with the present disclosure, comprises a welding-type power source configured to provide power to one or more components of the welding-type system; a multi-conductor connector configured for connecting the welding-type power source to a peer device used in the welding-type system during welding-type operations, the multi-conductor connector comprising a plurality of conductor; wherein the welding-type power source is configured to provide, via the plurality of conductors in the multi-conductor connector, power to the peer device, for powering and/or driving the peer device during the welding-type operations; wherein the welding-type power source is configured to perform data communication via the plurality of conductors; wherein the data communication is performed during the providing of power via the plurality of conductors; and wherein the data communication is performed using at least one conductor that is also used in the providing of power from the welding-type power source to the peer device. The data communication may be bidirectional data communication. The multi-conductor connector may comprise a shield surrounding and/or enclosing the plurality of conductors.

In an example embodiment, the data communication comprises digital communication. In this regard, as used therein, "digital communication" may comprise communication where the communication of data itself is digital in nature but the signaling used to facilitate the communication may have and/or may use analog characteristics-e.g., using analog modulation. The digital communication may be bidirectional digital communication.

In an example embodiment, the welding-type power source is configured to perform the data communication using power-over-dataline (PoDL) based communication. In this regard, as used herein the term "powerline" refers to specifically and exclusively the conductors being used to provide operational power from the welding-type power source to the peer device.

In an example embodiment, the welding-type power source is configured to perform data communication using single-pair Ethernet (SPE) based communication.

In an example embodiment, the welding-type power source is configured to perform the data communication via same conductors used in the providing of power.

In an example embodiment, the multi-conductor connector comprises a two-conductor cable.

In an example embodiment, the multi-conductor connector comprises a three-conductor cable.

In an example embodiment, the multi-conductor connector comprises a four-conductor cable.

Another example welding-type system, in accordance with the present disclosure, comprises a welding-type wire feeder configured to feed electrode wire during welding-type operations; and a multi-conductor connector configured for connecting the welding-type wire feeder to a power source in the welding-type system, the multi-conductor connector comprising a plurality of conductor; wherein power is provided, via the plurality of conductors in the multi-conductor connector, to the welding-type wire feeder, for powering and/or driving the welding-type wire feeder during the welding-type operations; wherein the welding-type wire feeder is configured to perform data communication via the plurality of conductors; wherein the data communication is performed during the providing of power via the plurality of conductors; and wherein the data communication is performed using at least one conductor that is also used in the providing of power to the welding-type wire feeder. The data communication may be bidirectional data communication. The multi-conductor connector may comprise a shield surrounding and/or enclosing the plurality of conductors.

In an example embodiment, the data communication comprises digital communication. In this regard, as used therein, "digital communication" may comprise communication where the communication of data itself is digital in nature but the signaling used to facilitate the communication may have and/or may use analog characteristics-e.g., using analog modulation. The digital communication may be bidirectional digital communication.

In an example embodiment, the welding-type wire feeder is configured to perform the data communication using power-over-dataline (PoDL) based communication. In this regard, as used herein the term "powerline" refers to specifically and exclusively the conductors being used to provide operational power from the welding-type power source to the welding-type wire feeder.

In an example embodiment, the welding-type wire feeder is configured to perform data communication using single-pair Ethernet (SPE) based communication.

In an example embodiment, the welding-type wire feeder is configured to perform the data communication via same conductors used in the providing of power.

In an example embodiment, the multi-conductor connector comprises a two-conductor cable.

In an example embodiment, the multi-conductor connector comprises a three-conductor cable.

In an example embodiment, the multi-conductor connector comprises a four-conductor cable.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1 A welding-type system, comprising:
   a welding-type power source configured to provide power to one or more components of the welding-type system;
   a welding-type wire feeder configured to feed electrode wire during welding-type operations; and
   a multi-conductor connector configured for connecting the welding-type power source to the welding-type wire feeder, the multi-conductor connector comprising a plurality of conductors;
   wherein the welding-type power source is configured to provide, via the plurality of conductors in the multi-conductor connector, power to the welding-type wire feeder, for powering and/or driving the welding-type wire feeder during the welding-type operations;
   wherein one or both of the welding-type power source and the welding-type wire feeder are configured to perform data communication via the plurality of conductors;
   wherein the data communication is performed during the providing of power via the plurality of conductors; and
   wherein the data communication is performed using at least one conductor that is also used in the providing of power from the welding-type power source to the welding-type wire feeder.
Clause 2 The welding-type system according to clause 1, wherein the data communication comprises digital communication.
Clause 3 The welding-type system according to clause 1, wherein one or both of the welding-type power source and the welding-type wire feeder are configured to perform the data communication using power-over-dataline (PoDL) based communication.
Clause 4 The welding-type system according to clause 1, wherein one or both of the welding-type power source and the welding-type wire feeder are configured to perform data communication using single-pair Ethernet (SPE) based communication.
Clause 5 The welding-type system according to clause 1, wherein one or both of the welding-type power source and the welding-type wire feeder are configured to perform the data communication via same conductors used in the providing of power.
Clause 6 The welding-type system according to clause 1, wherein the multi-conductor connector comprises a two-conductor cable.
Clause 7 The welding-type system according to clause 1, wherein the multi-conductor connector comprises a three-conductor cable.
Clause 8 The welding-type system according to clause 1, wherein the multi-conductor connector comprises a four-conductor cable.
Clause 9 A welding-type system, comprising:
   a welding-type power source configured to provide power to one or more components of the welding-type system;
   a multi-conductor connector configured for connecting the welding-type power source to a peer device used in the welding-type system during welding-type operations, the multi-conductor connector comprising a plurality of conductor;
   wherein the welding-type power source is configured to provide, via the plurality of conductors in the multi-conductor connector, power to the peer device, for powering and/or driving the peer device during the welding-type operations;
   wherein the welding-type power source is configured to perform data communication via the plurality of conductors;
   wherein the data communication is performed during the providing of power via the plurality of conductors; and
   wherein the data communication is performed using at least one conductor that is also used in the providing of power from the welding-type power source to the peer device.
Clause 10 The welding-type system according to clause 9, wherein the data communication comprises digital communication.
Clause 11 The welding-type system according to clause 9, wherein the welding-type power source is configured to perform the data communication using power-over-dataline (PoDL) based communication.
Clause 12 The welding-type system according to clause 9, wherein the welding-type power source is configured to perform data communication using single-pair Ethernet (SPE) based communication.
Clause 13 The welding-type system according to clause 9, wherein the welding-type power source is configured to perform the data communication via same conductors used in the providing of power.
Clause 14 The welding-type system according to clause 9, wherein the multi-conductor connector comprises a two-conductor cable.
Clause 15 The welding-type system according to clause 9, wherein the multi-conductor connector comprises a three-conductor cable.
Clause 16 The welding-type system according to clause 9, wherein the multi-conductor connector comprises a four-conductor cable.
Clause 17 A welding-type system, comprising:
   a welding-type wire feeder configured to feed electrode wire during welding-type operations; and
   a multi-conductor connector configured for connecting the welding-type wire feeder to a power source in the welding-type system, the multi-conductor connector comprising a plurality of conductor;
   wherein power is provided, via the plurality of conductors in the multi-conductor connector, to the welding-type wire feeder, for powering and/or driving the welding-type wire feeder during the welding-type operations;
   wherein the welding-type wire feeder is configured to perform data communication via the plurality of conductors;
   wherein the data communication is performed during the providing of power via the plurality of conductors; and
   wherein the data communication is performed using at least one conductor that is also used in the providing of power to the welding-type wire feeder.
Clause 18 The welding-type system according to clause 17, wherein the data communication comprises digital communication.
Clause 19 The welding-type system according to clause 17, wherein the welding-type wire feeder is configured to perform the data communication using power-over-dataline (PoDL) based communication.
Clause 20 The welding-type system according to clause 17, wherein the welding-type wire feeder is configured to perform data communication using single-pair Ethernet (SPE) based communication.
Clause 21 The welding-type system according to clause 17, wherein the welding-type wire feeder is configured to perform the data communication via same conductors used in the providing of power.
Clause 22 The welding-type system according to clause 17, wherein the multi-conductor connector comprises a two-conductor cable.
Clause 23 The welding-type system according to clause 17, wherein the multi-conductor connector comprises a three-conductor cable.
Clause 24 The welding-type system according to clause 17, wherein the multi-conductor connector comprises a four-conductor cable.

## Claims

1. A welding-type system, comprising:
a welding-type power source configured to provide power to one or more components of the welding-type system;
a welding-type wire feeder configured to feed electrode wire during welding-type operations; and
a multi-conductor connector configured for connecting the welding-type power source to the welding-type wire feeder, the multi-conductor connector comprising a plurality of conductors;
wherein the welding-type power source is configured to provide, via the plurality of conductors in the multi-conductor connector, power to the welding-type wire feeder, for powering and/or driving the welding-type wire feeder during the welding-type operations;
wherein one or both of the welding-type power source and the welding-type wire feeder are configured to perform data communication via the plurality of conductors;
wherein the data communication is performed during the providing of power via the plurality of conductors; and
wherein the data communication is performed using at least one conductor that is also used in the providing of power from the welding-type power source to the welding-type wire feeder.

2. The welding-type system according to claim 1, wherein the data communication comprises digital communication.

3. The welding-type system according to claim 1, wherein one or both of the welding-type power source and the welding-type wire feeder are configured to perform the data communication using power-over-dataline (PoDL) based communication.

4. The welding-type system according to claim 1, wherein one or both of the welding-type power source and the welding-type wire feeder are configured to perform data communication using single-pair Ethernet (SPE) based communication.

5. The welding-type system according to claim 1, wherein one or both of the welding-type power source and the welding-type wire feeder are configured to perform the data communication via same conductors used in the providing of power.

6. The welding-type system according to claim 1, wherein the multi-conductor connector comprises a two-conductor cable or
wherein the multi-conductor connector comprises a three-conductor cable or
wherein the multi-conductor connector comprises a four-conductor cable.

7. A welding-type system, comprising:
a welding-type power source configured to provide power to one or more components of the welding-type system;
a multi-conductor connector configured for connecting the welding-type power source to a peer device used in the welding-type system during welding-type operations, the multi-conductor connector comprising a plurality of conductor;
wherein the welding-type power source is configured to provide, via the plurality of conductors in the multi-conductor connector, power to the peer device, for powering and/or driving the peer device during the welding-type operations;
wherein the welding-type power source is configured to perform data communication via the plurality of conductors;
wherein the data communication is performed during the providing of power via the plurality of conductors; and
wherein the data communication is performed using at least one conductor that is also used in the providing of power from the welding-type power source to the peer device.

8. The welding-type system according to claim 7, wherein the data communication comprises digital communication.

9. The welding-type system according to claim 7, wherein the welding-type power source is configured to perform the data communication using power-over-dataline (PoDL) based communication or
wherein the welding-type power source is configured to perform data communication using single-pair Ethernet (SPE) based communication or
wherein the welding-type power source is configured to perform the data communication via same conductors used in the providing of power.

10. The welding-type system according to claim 7, wherein the multi-conductor connector comprises a two-conductor cable or
wherein the multi-conductor connector comprises a three-conductor cable or
wherein the multi-conductor connector comprises a four-conductor cable.

11. A welding-type system, comprising:
a welding-type wire feeder configured to feed electrode wire during welding-type operations; and
a multi-conductor connector configured for connecting the welding-type wire feeder to a power source in the welding-type system, the multi-conductor connector comprising a plurality of conductor;
wherein power is provided, via the plurality of conductors in the multi-conductor connector, to the welding-type wire feeder, for powering and/or driving the welding-type wire feeder during the welding-type operations;
wherein the welding-type wire feeder is configured to perform data communication via the plurality of conductors;
wherein the data communication is performed during the providing of power via the plurality of conductors; and
wherein the data communication is performed using at least one conductor that is also used in the providing of power to the welding-type wire feeder.

12. The welding-type system according to claim 11, wherein the data communication comprises digital communication.

13. The welding-type system according to claim 11, wherein the welding-type wire feeder is configured to perform the data communication using power-over-dataline (PoDL) based communication, or
wherein the welding-type wire feeder is configured to perform data communication using single-pair Ethernet (SPE) based communication, or
wherein the welding-type wire feeder is configured to perform the data communication via same conductors used in the providing of power.

14. The welding-type system according to claim 11, wherein the multi-conductor connector comprises a two-conductor cable or
wherein the multi-conductor connector comprises a three-conductor cable or
wherein the multi-conductor connector comprises a four-conductor cable.
